# EUROPEAN PATENT APPLICATION

(11) **EP 2 489 645 A1**
(43) Date of publication of application: **22.08.2012**
(21) Application number: 12155838.1
(22) Date of filing: 16.02.2012
(51) Int. Cl.: C03C 17/32, C03C 17/34, C09D 175/04

(54) **Process for applying a shatterproof coating to the surface of a glass item**

(30) Priority: 17.02.2011 IT MI20110239
(71) Applicant: Bormioli Luigi S.p.A., 43122 Parma (IT)
(72) Inventor: Baratta, Simone, 43123 PARMA (IT)
(74) Representative: Lotti, Giorgio

(57) **Abstract**

This invention relates to a process for applying a shatterproof coating to the surface of a glass item, comprising the following steps: (a) applying, on at least one portion of the surface of a glass item, a polymerisable composition comprising (i) a resin selected from the group consisting of polyurethane resins, polyester resins, acrylic resins, silicone resins and/or their mixes, dissolved or dispersed in water or in an organic solvent; (ii) an adhesion promoter based on an organosilane compound; (iii) possibly a UV photo-initiator; (b) evaporating the water or the organic solvent; (c) polymerising said composition, forming on the surface of said glass item a shatterproof coating film capable of containing the dispersion of the glass fragments that may form in the event of the breakage of the item. The process also preferably comprises a step for the application of an additional anti-wear coating film on top of the shatterproof coating. This invention also relates to a polymerisable composition that can be used in the above process and to a glass item with a shatterproof coating that can be obtained by the above process.

## Description

This invention relates to a process for applying a shatterproof coating to the surface of a glass item.

This invention falls under the technical sector relating to processes for applying protective coatings to the surfaces of glass items.

In particular, this invention falls under the sector relating to processes for applying protective coatings to the surfaces of glass of items so as to make them more shock resistant and, in the event of breakage, to contain the dispersion of glass fragments within the surrounding environment.

The breakage of glass items following impact with other items produces many fragments that disperse at high speed, in an uncontrolled manner, around the point of impact, and thus constitute a significant risk for the users of said items.

Safety glass, i.e. glass onto the surface of which, a coating that contains the dispersion of the fragments in the event of breakage (shatterproof coating), has been used in the building and motor vehicle sectors for some time now.

In this sector, safety glass generally takes the form of flat glass. In one embodiment of the prior art, the shatterproof coating is created by applying to the surface of the glass a liquid polymer composition that is subsequently polymerised by heat, thus forming an elastic film that reduces the dispersion of fragments in the event of breakage.

More frequently, flat shatterproof glass is prepared by applying on at least one of the sides of the glass an adhesive coloured or transparent film that is subsequently attached to the surface of the glass by heat.

In the sector of glass containers for food, cosmetics and glass tableware sector, shatterproof coatings are not generally applied to glass. Indeed in this sector, protective surface coatings are primarily applied with a view to preserving the mechanical properties of the glass items during handling, thus preventing them from being scratched due to friction, which is their main cause of breakage. The protective coatings applied are typically obtained via cold spraying of polyethylene-based compositions or hot spraying of tin chlorides.

The industrial production of glass items with shatterproof coatings according to the prior art has various drawbacks.

Shatterproof coatings are generally obtained by applying a polymer composition to the surface of the glass using curtain coating, dip coating or electrospray methods. However, in order to ensure that the coating adequately adheres to the surface of the glass, the application surface must be preventatively treated with a primer, such as an organo-silicate compound for example.

However, the glass pre-treatment stage significantly increases the duration of the whole production process for coated glass items.

The pre-treatment stage can be avoided by installing a primer application unit along the production line for the coated glass items, upstream of the coating application unit. This solution reduces the duration of the production process but increases plant investment costs.

A further drawback of the processes of the aforementioned prior art, is linked to the fact that the coating applied lacks sufficient resistance to contact with alcohol-based substances and to repeated hand-wash or dish-washer cycles (alkaline solutions). This prevents the use of these coating processes to treat glass items for use in the perfume and cosmetics industries and tableware such as food containers.
The scope of this invention is to overcome the drawbacks highlighted in the prior art.

In particular, the scope of this invention is to identify a process for applying a shatterproof coating to a glass item that is simpler, quicker and more economical to carry out than the processes of the prior art.

In the light of these and other scopes that will become clearer from the remainder of the document, a first aim of this invention is a process for applying a shatterproof coating to the surface of a glass item, comprising the steps of:
(a) applying, on at least one portion of the surface of a glass item, a polymerisable composition comprising
   (i) a resin selected from the group consisting of polyurethane resins, polyester resins, acrylic resins, silicone resins and/or their mixtures, dissolved or dispersed in water or in an organic solvent;
   (ii) an adhesion promoter based on an organosilane compound;
   (iii) possibly a UV photo-initiator;
(b) evaporating the water or the organic solvent;
c) polymerizing said composition and forming on the surface of said glass item a shatterproof coating film capable of containing the dispersion of the glass fragments that may be generated if the item is broken.

A second aim of this invention is the aforementioned polymerisable composition for use in the aforementioned process.

A third aim of this invention is a glass item, having at least one portion of the surface that is coated with a shatterproof film that can be obtained through the aforementioned process.

The Applicant has surprisingly found an easily performed process that allows a shatterproof coating to be applied to the surface of a glass item without recourse to the preventative application of any primer to the surface of the item.

For the purposes of the present invention, the term "shatterproof coating" shall mean a coating film that, in the event of the breakage of the glass item to which it has been applied, is able to contain the dispersion of the fragments generated around the point at which the breakage occurs.

The process according to the invention has a lower number of operating steps compared to the processes of the prior art and is therefore quicker and more economical that the prior art.

When applied on an industrial scale, the process pursuant to this invention allows the production performance of coated glass items to be significantly increased, while at the same time reducing plant investment costs.

In addition to containing the dispersion of fragments in the event of breakage, glass items coated via the process according to this invention, have improved resistance to impact and greater resistance to abrasion. These characteristics reduce the risk of the glass item breaking in the event of impact.

The Applicant has surprisingly found that the aforementioned benefits can be achieved by applying a polymerisable composition containing a polymer resin with low cross-linking in combination with an adhesion promoter to the surface of the glass container.

The process according to this invention allows glass items of any shape to be coated with a shatterproof coating.

This invention is particularly suitable for applying shatterproof coatings to the surface of tableware and glass containers such as bottles, glasses and vases, particularly those used to contain liquid foodstuffs, perfumes and cosmetics.

Any composition of glass can be used for the items to be coated through the process according to this invention. Application of the process according to this invention to tempered glass surfaces is especially preferred. The glass can be chemically or heat tempered.

When the shatterproof coating is applied to tempered glass items through the process according to this invention, the coated item has markedly superior shock-resistant qualities (up to four time more) than an item in annealed glass having the same shatterproof coating. Furthermore, in the event of breakage, a tempered glass item that is coated with a shatterproof coating applied according to this invention, produces small fragments with rounded edges that are thus less dangerous.

In the first step of the process according to the present invention (step (a)), a polymerisable composition comprising a resin and an adhesion promoter, that have been dissolved or dispersed in water or in an organic solvent, are applied to the surface of the glass item.

The resin is selected from the group consisting of polyurethane resins, polyester resins, acrylic resins, silicone resins and/or their mixtures.

In a preferred embodiment, the polymerisable composition comprises an aqueous dispersion of a polyurethane prepolymer obtained by reaction of 4,4'-dicyclohexylmethane diisocyanate (H12MDI) with at least one polyol selected among polyethylene glycols, propylene glycols and polytetrahydrofurans and/or their mixtures.

The prepolymer is obtained from a reaction mixture containing a variable quantity of H12MDI of between 20 to 50% by weight and a variable quantity of polyols of between 20 to 50% by weight (percentages refer to the weight of the solid prepolymer).

The aqueous dispersion of the polyurethane prepolymer can also contain between 5 and 20% by weight of dimethylolpropionic acid (DMPA), with reference to the weight of the solid prepolymer.

Dispersed prepolymer particles are between 5 and 300 nanometres in dimension.

The polyurethane prepolymer has a glass transition temperature ranging from -10 to 20°C and an average molecular weight of between 10000 and 300000 g/mol.

The pH of the aqueous dispersion is of between 3 and 10.

The adhesion promoter present in the polymerisable composition is an organosilane compound. Its concentration in the polymerisable composition varies from 1% to 5% by weight, preferably from 2% to 3% by weight (percentages refer to the weight of the resin or of the polyurethane prepolymer).

Once the polymerisable composition has been applied and polymerised, it forms a shatterproof coating on the glass comprising of an elastic film that adheres to the surface. Thanks to its elasticity, the coating film is able to absorb the kinetic energy from the fragments of glass that are generated in the event of the breakage of the item, thus containing their dispersion in the surrounding environment.

The presence of the adhesion promoter in the coating composition used in step (a) allows to avoid that the glass items to be coated are subjected to the pre-treatment with a primer, as instead required in the processes of the prior art.

When the polymerisable composition to be applied at step (a) of the process is an aqueous dispersion of a polyurethane prepolymer, it can be prepared by adding the adhesion promoter to an aqueous dispersion of the aliphatic polyurethane resin.

The viscosity of the polymerisable coating composition used in step (a) is equal to or greater than 60 s (DIN 4 test, 20°C), preferably between 150 s and 180 s.

This level of viscosity allows uniform application without defects even on non-flat surfaces, such as the surfaces of glass containers such as bottles, glasses and vases.

In particular, a polymerisable composition having a viscosity that falls within the above range can be easily deposited in the required thickness onto the surfaces of the glass without the appearance of defects due to trickles or drips, even when the surfaces are kept in a vertical position during application.

In step (a), the polymerisable composition is applied in a quantity that varies between 0.01 g/cm² and 0.08 g/cm² preferably between 0.02 g/cm² and 0.03 g/cm².

The thickness of the polymerisable composition applied to the surface of the glass item generally varies between 50 micrometers and 150 micrometers (referring to the wet, applied composition).

The viscosity of the polymerisable composition can be adjusted by adding thickening compounds of the type known in the prior art.

The concentration of thickening compounds in the polymerisable composition typically varies between 0.1% and 1% by weight, preferably between 0.2% and 0.3% by weight (percentages refer to the weight of the resin or of the polyurethane prepolymer).

The polymerisable composition can also additionally comprise thinners in a variable quantity of between 1% and 10%, preferably between 2% and 3% by weight, and possibly of water, in a variable quantity of between 0% and 5% by weight, preferably of between 2% and 3% by weight (percentages refer to the weight of the resin or of the polyurethane prepolymer).

The thinner and the water improve the covering capacity of the resin in terms of the application surface and ensure the application of a coating composition layer of uniform thickness.

The polymerisable composition can be transparent or coloured. In the case of the latter, the composition also contains colouring agents.

The polymerisable composition can also contain other agents that give various aesthetic effects (such as powdered products that give luminescence or pinhole effects to the surface of the treated glass).

Step (a) of the application of the coating composition can be carried out by spraying, curtain coating, or dipping.

Preferably, in consideration of the viscosity of the polymerisable composition, application step (a) is carried out by spraying using the "airless", "airmix" and high-pressure spray techniques. "Airmix" application is particularly preferred due to the increased nebulisation capacity of the composition and the lower plant costs.

Application of the polymerisable composition (step (a)) can be carried out at room temperature. It is however preferable that the polymerisable composition be applied to the surface of the glass when the temperature of the glass is of between 30°C and 80°C, preferably between 35°C a 50°C. This results in faster evaporation of the solvent from the applied layer of composition and consequently allows the application of a greater thickness of material that is free from trickling defects.

The glass can be heated by flaming.

In the case of items comprising of glass containers, the shatterproof coating can be applied to the external surface and/or the internal surface.

Following its application, the polymerisable composition, after the evaporation of the water or the solvent contained therein, undergoes polymerisation (step (C)).

Cross-linking of the resin with formation of the shatterproof film on the surface of the glass takes place in the polymerisation step. Polymerisation takes place via heating (at 40-50°C) or at room temperature, via UV irradiation.

The evaporation step (b) that precedes the polymerisation step (c) is a key procedure step. Evaporation of the solvent must take place under controlled conditions, i.e. under conditions such that the solvent does not evaporate too quickly and, at the same time, does not only partially evaporate before the start of the resin cross-linking step.

Too quick an evaporation in fact damages the surface of the shatterproof coating due to the formation of small air bubbles, which as well as reducing adhesion of the coating to the glass, give it a "pinhole" appearance.

If, on the other hand, evaporation takes place so slowly that it is incomplete at the start of polymerisation, the solvent will continue to evaporate during this step, causing the swelling of shatterproof coating that forms.

In a first embodiment, following application of the polymerisable composition, the water or the solvent is left to evaporate at room temperature from the surface of the glass item for a time ranging between 10 and 20 minutes.

In a second embodiment the solvent evaporation time can be reduced by moderately heating the surface of the glass item at a temperature of between 35 and 55°C, preferably between 40° and 50°C, via infrared irradiation for example.

In a preferred embodiment of this invention, the shatterproof film is covered by a protective, anti-wear coating film.

In fact, some types of glass items such as glasses, cups and trays undergo frequent washing during their life cycle (by hand or dishwasher) generally with alkaline aqueous solutions that cause the gradual wear of the shatterproof coating.

The shatterproof coating is also subject to wear in the case of its application to glass surfaces that are intended to come into contact with alcohol-based compositions (e.g. perfumes and liqueurs).

In these cases the problem of wearing of the shatterproof coating can be overcome by applying an additional protective coating (anti-wear coating) to the shatterproof coating, which guarantees preservation of the fragment-containing properties of the shatterproof coating over time, even for those glass items that will be subject to frequent washings or that will come into contact with substances containing alcohol (perfumes, liqueurs, etc.).

In terms of the application of the anti-wear coating, the process according to this invention comprises the following additional steps:
(d) apply an acrylic/polyurethane-based polymerisable lacquer to the shatterproof film obtained on conclusion of the polymerisation of step (c),
(e) polymerise said lacquer with the formation of an anti-wear coating film.

The polymerisable lacquer is an aqueous or solvent dispersion comprising a two-component acrylic/polyurethane resin, a polyisocyanic hardener and optionally water

During polymerisation the isocyanic hardener interacts with the resin, giving rise to a polyaddition reaction and forming a second film coating (anti-wear coating) to protect the underlying shatterproof coating.

The polymerisable lacquer can be transparent or coloured. In the case of the latter, the lacquer also contains colouring agents.

The polymerisable lacquer is prepared from an acrylic-polyurethane base, to which a variable amount of between 10% and 35% by weight, preferably between 25% and 30% by weight, of isocyanic hardener is added, and if necessary up to 5%, preferably between 2% to 3% by weight of water (percentages refer to the weight of the acrylic-polyurethane base).

The polymerisable lacquer can also contain the colouring agents or other additives of the type used and known in the sector relating to the surface treatment of glass to give various aesthetic effects (such as powdered products that give luminescence or pinhole effects to the surface of the treated glass).

The viscosity of the polymerisable lacquer used in step (d) is equal to or greater than 40 s (DIN 4 test, 20°C), preferably between 50 s and 60 s.

This viscosity allows uniform application without defects even on non-flat glass surfaces, such as the surfaces of glass containers such as bottles, glasses and vases.

In step (d), the polymerisable lacquer is applied in a quantity that varies between 0.01 g/cm² and 0.05 g/cm², preferably between 0.01 g/cm² and 0.02 g/cm².

The thickness of the polymerisable lacquer applied varies between a minimum of 80 micrometers and a maximum of 150 micrometers (referring to the wet, applied composition).

Step (d) of the application of the polymerisable lacquer can be carried out using the same techniques as in step (a), i.e. by spraying, curtain coating, or dipping. Preferably, application of the composition is carried out using the spraying technique.

On completion of the application, the glass item undergoes an (e) polymerisation step, where the resin is cross-linked with the consequent formation of the anti-wear coating.

To prevent loss of the mechanical properties of the shatterproof coating, in particular elasticity, during the polymerisation step (e) of the acrylic-polyurethane lacquer, it is preferable that the surface of the glass item be heated in accordance with the following heating sequence:
- heating to 30°C for a variable period of time of between 3 and 6 minutes,
- increasing the temperature to 50°C and keeping said glass item at this temperature for a variable period of time of between 3 and 6 minutes,
- further increasing the temperature to a value variable between 50°C and 150°C, preferably between 55°C and 75°C, and keep the glass item at the selected temperature for between 30 and 60 minutes, preferably for between 35 and 45 minutes.

In addition to preserving the properties of the shatterproof coating, progressively heating the glass item in accordance with this temperature profile allows significant energy savings compared to the processes according to the prior art, where the cross-linking of polyurethane-based protective coatings generally takes place at temperatures of between 200-300°C.

The process according to this invention is a process that can be easily achieved at industrial level on a continuous production line such as is generally used in the sector for the superficial coating of glass items.

One possible embodiment of a continuous production line for the application of a shatterproof coating and an anti-wear coating by spraying is described below.

The continuous production line comprises a conveyor belt on which the glass items to be coated are placed and anchored onto specially shaped supports.

The conveyor belt carries the glass items to be treated through the various treatment units (spraying, polymerisation, etc.).

Where an initial flaming step is envisaged, the items to be coated are carried through this first flaming unit to heat the surface of the glass item.

Once the surface of the glass has reached the desired temperature, the items are carried through a spraying cabin equipped with a system of spray guns capable of uniformly spraying the polymerisable composition onto the surface to be treated.

On completion of the spraying step, the conveyor belt carries the glass items to a polymerisation cabin, where the resin contained in the polymerisable composition is cross-linked.

On route to the polymerisation cabin, the solvent contained in the coating composition can be allowed to evaporate at room temperature.

The distance between the exit of the spraying cabin and access to the polymerisation cabin as well as the speed of the conveyor belt are selected so as to guarantee complete evaporation of the solvent.

Alternatively, evaporation can be accelerated by passing the items onto which the composition coating has been applied through a heated area, before entering the polymerisation cabin.

Once the shatterproof coating has been applied, the glass items continue towards a second spraying cabin, where the polymerisable lacquer is applied on top of the shatterproof coating. Downstream of the second spraying cabin, the conveyor belt carries the glass items towards a second polymerisation chamber, where the lacquer is polymerised via heating and the anti-wear coating is formed.

The glass items coated according to the present invention have functional properties that are extremely different from those of the same glass items which have not been coated with any shatterproof coating. In particular, they have shatterproof properties and are able to contain the dispersion of fragments in the event of breakage.

In addition, the use of the coating process according to this invention does not limit the possibility of further treating the glass so as to improve both the functional and aesthetic characteristics of the end products. For example, in the case of shatterproof transparent coatings, any type of decoration can be applied to the glass before application of the shatterproof coating, via organic screen printing or pad printing techniques or by gluing on decorative ceramic or precious metal elements.

Additional decorative elements can also be applied onto the anti-wear coating, such as by hot marking, organic screen printing, etc.

In addition to giving an anti-dispersion effect as relates to the fragments in the event of breakage, the shatterproof coating applied to the glass items according to the process of the present invention, significantly increases (by at least 20%) resistance to abrasion and shock compared to untreated glass. Furthermore, in the event of light impact, the resistance and elasticity of the shatterproof coating applied prevent leakage of the product contained within the glass container.

The shatterproof coating and the anti-wear protective coating are also extremely hard superficially and transmit a sensation similar to that of uncoated glass to the touch.

In the case of glass containers coated both internally and externally, the chemical characteristics of the shatterproof coating and the anti-wear coating are suitable for contact with foodstuffs.

The below embodiment example is provided for purely illustrative purposes of the present invention and should not be intended as limiting the protection scope defined by the enclosed claims.

### EXAMPLE

A polymerisable coating composition was prepared by mixing the following components (parts by weight p/w):
100 p/w of water soluble polyurethane base,
3 p/w of organosilane adhesion promoter;
2 p/w of diluent;
2 p/w of thickening agent.

The polymerisable composition was applied by spraying onto the entire external surface of a series of glasses; the solvent was left to evaporate at room temperature for 9 minutes and, subsequently, the polymerisation of the composition was carried out at a temperature of 40 - 50°C for around 10 minutes.

A commercial product was used as a polyurethane base, consisting of an aqueous dispersion of a prepolymer obtained via the reaction of H12MDI and a polyols mix of ethylene and propylene glycols in the presence of DMPA.

The shatterproof coating thus obtained was then also coated with an anti-wear coating, applied by spraying a polymerisable lacquer prepared by mixing the following components (parts by weight (p/w)):
100 p/w of acrylic/polyurethane base
30 p/w of isocyanate hardener;
2.5 p/w of water.

A commercial product was used as the acrylic/polyurethane base, consisting of an aqueous dispersion of an acrylic/polyurethane resin mix.

The impact resistance of the glasses was tested using an "Impact Tester" tool manufactured by the company American Glass Research. The tests were carried out in accordance with the UNI 9302:1988 standard (Glass Containers. Determination of impact strength). The results achieved were compared against those of the same, uncoated glasses.

The test highlighted that the coated glasses resist to breakage up to an impact load of 120 inches, while the uncoated glasses resist up to a maximum of 112 inches (average values calculated on 6 tested glasses).

The coating's capacity to contain the glass fragments following breakage caused by the glass falling to the ground from a height of 1 m was also tested. The results of the observations are set out below.

| | **Uncoated glasses** | **Coated glasses** |
|---|---|---|
| Fall with the bottom of the glass having first contact with the ground | No breakage was observed. Contact between the bottom of the glass and the ground did not cause the glass to bounce and the sample remained whole. | The bottom of the glass bounced on the ground resulted in breakage at the rim area on subsequent contact with the ground. Complete containment of the fragments. |
| Fall with the side of the glass having first contact with the ground | The sample broke instantly with high levels of fragmentation into small pieces. | The glass bounced and was subject to subsequent localised breakage at the rim area. Complete containment of the fragments. |
| Fall with the rim of the glass having first contact with the ground | The glass broke instantly with high levels of fragmentation into small pieces, except for the bottom of the glass, which did not break. | The glass broke as soon as it came into contact with the ground. Complete containment of the fragments. |

The glasses treated according to this invention also underwent 500 wash cycles in an industrial dishwasher to check the resistance of the coating to the attack of the chemical agents in the basic substances present in the washing solution. After 500 wash cycles, the coating of the glasses was not altered, thus confirming the efficacy of the anti-wear coating at protecting the shatterproof coating.

The resistance of the glasses coating to contact with alcohol solutions was also tested by immersing a glass in absolute ethyl alcohol at room temperature. After 1 hour of immersion, the coating of the coated glasses showed no surface defects. It was observed that the coating only begins to show signs of damage after at least 2 hours of immersion.

## Claims

1. A process for applying a shatterproof coating to the surface of a glass item, comprising the following steps:
(a) applying, on at least one portion of the surface of a glass item, a polymerisable composition comprising
(i) a resin selected from the group consisting of polyurethane resins, polyester resins, acrylic resins, silicone resins and/or their mixtures, dissolved or dispersed in water or in an organic solvent;
(ii) an adhesion promoter based on an organosilane compound;
(iii) possibly a UV photo-initiator;
(b) evaporating the water or the organic solvent;
c) polymerizing said composition and forming on the surface of said glass item a shatterproof coating film capable of containing the dispersion of the glass fragments that may be generated in the event of the breakage of the item.

2. Process according to claim 1, **characterised in that** it comprises the following steps after step (c):
(d) applying a polymerisable acrylic/polyurethane-based lacquer onto said shatterproof coating film,
(e) polymerizing said lacquer with the formation of an anti-wear coating film.

3. Process according to one or more of the preceding claims, **characterised in that** said evaporation step (b) consists of allowing the water or solvent to evaporate at room temperature for a period of between 10 and 20 minutes.

4. Process according to claim 1 or 2, **characterised in that** said evaporation step (b) is performed by heating the surface of the glass at a variable temperature variable of 35 to 55°C, preferably between 40 and 50°C, and lasts for a time less than 10 minutes.

5. Process according to one or more preceding claims, **characterised in that** during the polymerisation step (e) said glass item is heated according to the following sequence:
- heating to 30° C for a variable period of time of between 3 and 6 minutes,
- increasing the temperature to 50°C and keeping said glass item at this temperature for a variable period of time of between 3 and 6 minutes,
- further increasing the temperature to a value variable between 50°C and 150°C, preferably between 55°C and 75°C,
- keeping said glass item at the chosen temperature for a variable time period of between 30 and 60 minutes, preferably between 35 and 45 minutes.

6. Process according to one or more of the preceding claims, **characterised in that** said resin in the polymerisable composition:
- is an aqueous dispersion of an aliphatic polyurethane prepolymer obtainable by reaction of 4,4'-dicyclohexylmethane diisocyanate (H12MDI) with at least one polyol selected among polyethylene glycols, propylene glycols and polytetrahydrofurans and/or their mixtures,
- comprises an adhesion promoter based on an organosilane compound.

7. The process according to one or more of the preceding claims, **characterised in that** said polymerisable composition used in said step (a) is applied in a variable quantity of between 0.01 g/cm² to 0.08 g/cm², preferably between 0.02 g/cm² and 0.03 g/cm².

8. The process according to claim 1, **characterised in that** said polymerisation step (c) is carried out by UV irradiation.

9. The process according to one or more of the preceding claims, **characterised in that**, in said step (a) the surface of said glass item is at a temperature that varies between 30°C and 80°C, preferably between 35°C and 50°C.

10. A polymerisable composition for use in step (a) of the process according to claim 1, comprising:
(i) a resin selected from the group consisting of polyurethane resins, polyester resins, acrylic resins, silicone resins and/or their mixtures, dissolved or dispersed in water or in an organic solvent;
(ii) an adhesion promoter based on an organosilane compound.

11. Composition according to the preceding claim, **characterized in that** said adhesion promoter is present in a quantity that varies between 1% and 5% by weight based on the weight of the resin or of the polyurethane prepolymer, preferably between 2% and 3% by weight.

12. The composition according to claim 10 or 11, **characterised in that** said resin in the polymerisable composition is an aqueous dispersion of an aliphatic polyurethane prepolymer obtainable by reaction of 4,4'-dicyclohexylmethane diisocyanate (H12MDI) with at least one polyol selected among polyethylene glycols, propylene glycols and polytetrahydrofurans and/or their mixtures, possibly in the presence of dimethylolpropionic acid.

13. A glass item comprising at least a portion of surface coated with a shatterproof coating film and possibly an anti-wear coating film that can be obtained through the process according to any of claims 1 to 9.
